# DEMANDE DE BREVET EUROPEEN

(11) **EP 2 178 020 A1**
(43) Date de publication de la demande: **21.04.2010**
(21) Numéro de dépôt: 08305700.0
(22) Date de dépôt: 17.10.2008
(51) Int. Cl.: G06K 7/00, G06K 19/077

(54) **Procédé d'assemblage d'un module SIM, connecteur associé, et dispositif comprenant un tel module**

(71) Demandeur: Gemalto SA, 92190 Meudon (FR)
(72) Inventeur: Till, Michel, 92197 Meudon Cedex (FR); Barbe, Serge, 92197 Meudon Cedex (FR); Arnal, Benoît, 92197 Meudon (FR); Rhelimi, Alain, 92197 Meudon (FR)
(74) Mandataire: Cassagne, Philippe M.J.

(57) **Abrégé**

La présente invention concerne un procédé d'assemblage d'un module SIM, caractérisé par les étapes successives de :
- alignement dudit module SIM et d'un connecteur,
- déplacement vertical, selon un axe perpendiculaire à un plan des zones de contact du connecteur, du module SIM vers le connecteur ou inversement,
- verrouillage mécanique du module SIM au connecteur par pression de fin de course lors dudit déplacement vertical, les contacts dudit module SIM étant ainsi maintenus affleurant avec des zones de contact respectives dudit connecteur.

## Description

La présente invention a trait de manière générale un procédé d'assemblage d'un module SIM et un dispositif M2M comprenant un tel module.

En français, la terminologie « M2M » désigne de manière commune « communication de machine à machine ». La technologie M2M est destinée par exemple à permettre aux machines, unités industrielles, véhicules, dispositifs ou plus généralement à tout équipement, quel qu'il soit, de communiquer avec tout autre machine, unité industrielle, véhicule, dispositif, serveur ou plus généralement à tout équipement distant, et cela sans intervention humaine, par exemple pour des applications de télésurveillance, télémétrie, alerte, gestion de flottes de véhicules, assistance à la personne, etc......

Grâce a l'essor des technologies de communication sans fil (GSM, GPRS, EDGE, Wi-Fi...), le M2M s'impose aujourd'hui comme une solution extrêmement performante et compétitive par exemple pour la gestion de parcs de machines distantes : la ou une intervention sur le terrain était incontournable pour surveiller, contrôler ou assurer la maintenance de machines reparties en divers endroits, la connectivite réseau intégré et les technologies web permettent une gestion centralisée a distance de ces mêmes machines.

Dans le cadre de l'utilisation de réseau(x) de télécommunications sans fil de type par exemple GSM, GPRS, le dispositif M2M utilisé comprend typiquement une unité de communication comprenant elle-même des moyens de traitement de signal en bande de base et en radiofréquence, et un module SIM qui peut prendre différents facteurs de forme.

Conventionnellement, dans un terminal de communication sans fil GSM par exemple, la carte SIM est un élément externe et amovible par rapport au terminal de communication auquel elle est associée. Elle a en effet pour objectif d'identifier un « abonné », qui peut être conduit à changer de terminal sans vouloir changer son identifiant associé à la carte SIM. La carte est disposée dans un logement prévu dans le dispositif de communication et est introduite dans ce logement par glissement dans une fente ou ouverture prévue à cet effet. Elle peut être changée physiquement durant la durée de vie du dispositif de communication, par exemple afin d'obtenir plus de fonctionnalités ou pour changer d'opérateur.

Pendant la production des cartes SIM, dans une phase appelée personnalisation de la carte SIM, le fabricant de cartes SIM procède à la mise en place dans la carte SIM des fonctions demandées par l'opérateur ainsi qu'au stockage des paramètres de l'opérateur (par exemple des clés secrètes, des algorithmes de cryptage,...).

Dans le cadre d'applications M2M, les unités de communication sont souvent enfouis dans des équipements et donc difficilement accessibles. Ils peuvent être soumis à de rudes environnements (température, humidité contraintes physiques, etc...). De telles unités de communication sont associées à un module ou une carte SIM dans le domaine des communications M2M, l'ensemble unité de communication / module SIM devant être packagé pour résister notamment aux contraintes environnementales, de sécurité, de fiabilité, et satisfaire aux contraintes d'accessibilité (un remplacement de la carte SIM pouvant être requis par exemple en réponse à la souscription à un nouvel abonnement) et de manipulation industrielle.

Pour remédier selon la technique antérieure aux problèmes de contraintes environnementales, de fiabilité et de manipulation industrielle, on peut ne pas recourir aux packagings standards des cartes SIM, tels que définis par les recommandations GSM (plug ID-000 format or 2FF ou aussi 3FF selon la norme ETSI TS 102.221).

Dans ce cas alors, il est souvent prévu de souder un circuit intégré directement sur l'unité de communication. On remédie ainsi iaux problèmes de manipulation industrielle qui peuvent se poser car il n'est plus nécessaire d'insérer latéralement par glissement une carte SIM dans une fente ou une de réception prévue à cet effet dans l'unité de communication, opération difficile à industrialiser. Cependant cette solution selon la technique antérieure à circuit intégré soudé rend impossible ou difficile tout changement ultérieur post-soudage du circuit intégré intégrant la fonction SIM, par exemple lorsqu'un changement d'abonnement est souhaité.

La présente invention vise à remédier aux inconvénients de la technique antérieure que ce soit dans les solutions à glissement latéral d'une carte SIM ou les solutions à circuit intégré soudé, en fournissant un nouveau procédé d'assemblage d'un module SIM connecté qui remédie aux problèmes de contraintes environnementales, de fiabilité, d'accessibilité, mais également d'interchangeabilité de module SIM et de manipulation industrielle connus dans la technique antérieure.

A cette fin, un procédé d'assemblage d'un module SIM selon l'invention comprend les étapes successives de :
- alignement dudit module SIM et d'un connecteur,
- déplacement vertical, selon un axe perpendiculaire à un plan des zones de contact du connecteur, du module SIM vers le connecteur ou inversement,
- verrouillage mécanique du module SIM au connecteur par pression de fin de course lors dudit déplacement vertical, les contacts dudit module SIM étant ainsi maintenus affleurant avec des zones de contact respectives dudit connecteur.

Avantageusement, le procédé comprend en outre une étape de soudage, à des points de connexion d'une unité de communication comprenant des moyens de traitement de signal en bande de base et en radiofréquence, de l'élément assemblé formé du module SIM et du connecteur ainsi verrouillés ensemble, le soudage couplant électriquement des bornes extérieures du connecteur, restées visibles sur une face de l'élément assemblé et reliées auxdites zones de contact, auxdits points de connexion de l'unité de communication.

Le module SIM peut avantageusement fournir des contacts additionnelles afin de fournir un moyen de communication pour une post-personnalisation in situ et un moyen d'alimentation indépendant de celui utilisé en mode opérationnel pour dans un environnent où le connecteur est soudé sur une platine électronique et que cette dernière n'est pas électriquement alimentée.

Un connecteur pour la mise en oeuvre d'un procédé selon l'invention, comprend conventionnellement :
- un support en matériau isolant recevant N éléments conducteurs, N strictement supérieur à 1 et typiquement égal à 8, ces N éléments conducteurs définissant N zones de contacts respectives saillant superficiellement dans un plan de réception de module SIM dudit connecteur et des secondes extrémités formant des bornes extérieures de couplage du connecteur. Selon l'invention le connecteur comprend, en outre :
- au moins un élément de verrouillage pour verrouiller mécaniquement le module SIM au connecteur par pression de fin de course lors dudit déplacement vertical.

Le connecteur peut comprendre avantageusement des moyens mécaniques se détruisant irréversiblement si le module SIM est extrait du connecteur sans le truchement d'un outil spécialisé.

Ou bien le module SIM a un facteur de forme compatible avec les équipements mobiles conventionnelles à savoir le 3FF ou le 2FF. Le module M2M peut lire dans l'unité de communication une information logique informant le module M2M que ce dernier est bien une machine. Le module M2M est ainsi assuré d'un environnement de travail autorisé et reste inactif si l'environnent n'est pas une machine.

L'invention fournit également un équipement ou unité de communication comprenant un connecteur selon l'invention.

D'autres caractéristiques et avantages de la présente invention apparaîtront plus clairement à la lecture de la description qui suit en relation avec les dessins annexés correspondants dans lesquels :
- La Figure 1 est une vue en perspective d'un connecteur selon une réalisation de l'invention;
- La Figure 2 est une vue en perspective d'un module SIM selon une réalisation de l'invention;
- la Figure 3 illustre vue en perspective d'un module SIM de la figure 2 accouplé à un connecteur de la figure 1 selon une réalisation de l'invention ; et
- la Figure 4 montre un équipement « pick and place » pour la mise en oeuvre de l'invention ; et
- la Figure 5 est une vue en coupe transversale d'un connecteur selon une autre variante l'invention se détruisant irréversiblement si le module SIM est extrait du connecteur sans le truchement d'un outil spécialisé.

### DESCRIPTION DETAILLEE DE L'INVENTION

Selon l'invention, de manière avantageuse, le module SIM, par exemple au format 2FF ou 3FF est conditionné dans son connecteur selon un procédé de l'invention. Comme montré dans la description qui suit, il résulte de l'invention que l'élément assemblé « connecteur + module SIM » est manipulable par un outillage traditionnel de type 'pick and place ».

Dans un mode de réalisation, l'extraction du module de son connecteur afin d'un remplacement dudit module M2M provoque une destruction du module M2M sans l'usage d'un outil spécialisé.

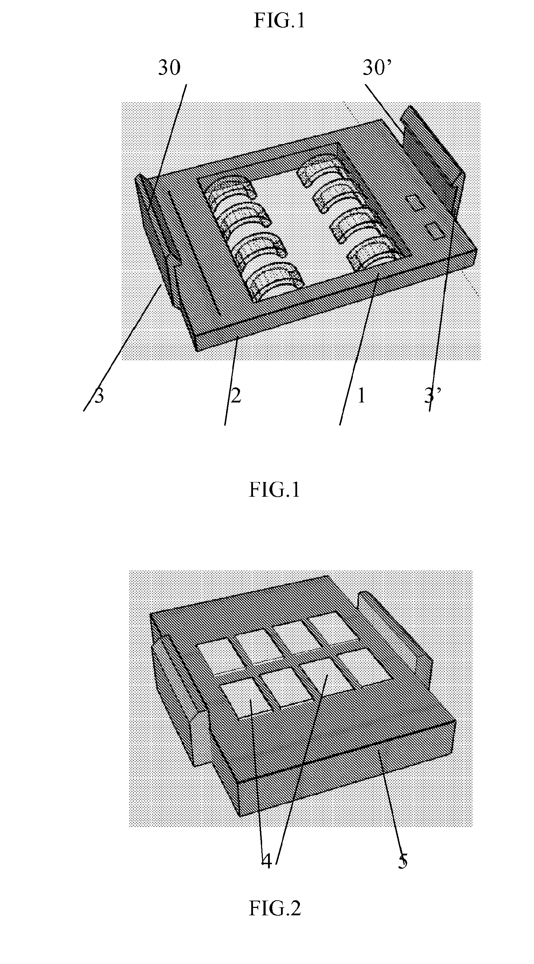

En référence à la Figure 1, un connecteur selon un mode de réalisation non limitatif de l'invention comprend un support en matériau isolant dont la base 2 a une forme générale parallélépipédique. Cette base 2 reçoit N éléments conducteurs, N étant typiquement égal à 8. Ces N éléments conducteurs définissent N zones de contacts 1 respectives saillant superficiellement dans un plan de réception de module SIM du connecteur. Des secondes extrémités (non représentées) forment des bornes extérieures de couplage du connecteur, destinées typiquement à être soudées à des bornes correspondantes d'un circuit imprimé d'une unité de communication, par exemple GSM. Chaque zone de contact 1 du connecteur (destinée à entrer en contact avec un contact correspondant du module SIM) est formée par une portion superficielle tangentielle extérieure d'une lame élastiquement déformable incurvée, cette lame déformable étant rendue solidaire de la base du connecteur lors du moulage de ce dernier.

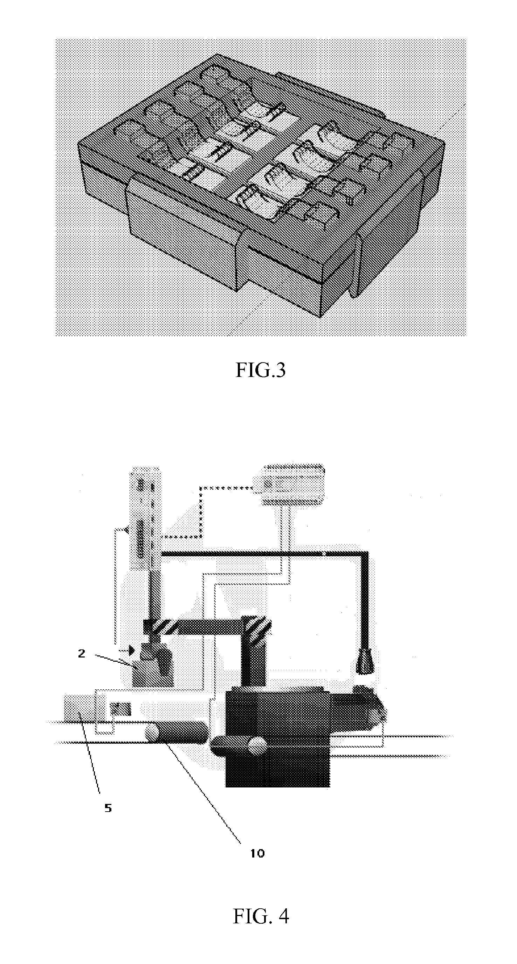

Selon l'invention, le connecteur comprend deux languettes butoir 3 et 3'. Ces deux languettes 3 et 3' sont parallèles et saillantes à deux extrémités de la base 2 du connecteur et comprennent chacune un élément butoir 3 à, 30' en regard de l'autre. Ces deux languettes 3, 3' offrent une flexibilité suffisante pour permettre leur écartement lors de l'assemblage du module SIM. Ce module SIM est montré à la Figure 2. Il se présente sous la forme conventionnelle au format 3FF d'un élément parallélépipédique 5 sur lequel sont formés des contacts 4. Sont ajoutées avantageusement pour les besoins de l'invention deux pattes de guidage. Comme montré aux Figures 3 et 4, selon l'invention, on procède aux étapes suivantes. Tout d'abord, on aligne le module SIM et le connecteur. On procède ensuite au déplacement vertical (vertical signifie ici tout mouvement perpendiculaire au plan des zones de contact du connecteur), selon un axe perpendiculaire à un plan des zones de contact du connecteur, du module SIM vers le connecteur ou inversement. Dans cette phase, les deux languettes butoir 3, 3' du connecteur vont s'écarter sous la force exercée sur le module SIM. Comme montré dans la Figure 3, se produit alors par pression de fin de course lors du déplacement vertical, le verrouillage mécanique du module SIM au connecteur. Les deux éléments butoir 30, 30' des deux languettes 3, 3' respectives venant se cliquer sur des rebords de la face du module SIM opposée à celle sur laquelle sont formées les contacts. Les contacts dudit module SIM étant ainsi maintenus affleurant avec des zones de contact respectives dudit connecteur. Les deux languettes butoir 3, 3' jouent alors pleinement leur fonction en maintenant, au moyen des éléments butoir des languettes, le connecteur et le module sous la forme d'un bloc assemblé.

Ces étapes sont par exemple mises en oeuvre au moyen d'un équipement de type connu « pick and place » illustré à la Figure 4, et selon l'invention avantageusement utilisé pour l'assemblage de module SIM. Comme on le voit sur cette Figure 4, un robot à bras à rotation et mouvement vertical est utilisé. Ce bras, par exemple à pression pneumatique contrôlée, opère de la manière suivante de manière répétitive. Après un premier mouvement de rotation, une extrémité de préhension du bras prend un connecteur 2 (ou alternativement un module SIM), pour l'aligner, après un second mouvement de rotation, avec un module SIM 5 (ou alternativement un connecteur) défilant sur un tapis 10. Puis, de manière synchronisée avec un arrêt ponctuel du tapis défilant 10, un mouvement vertical est effectué par le bras pour verrouiller le connecteur et le module SIM ensemble comme décrit ci-dessus.

Avantageusement, le connecteur comprend des moyens mécaniques se détruisant irréversiblement si le module SIM est extrait du connecteur sans le truchement d'un outil spécialisé.

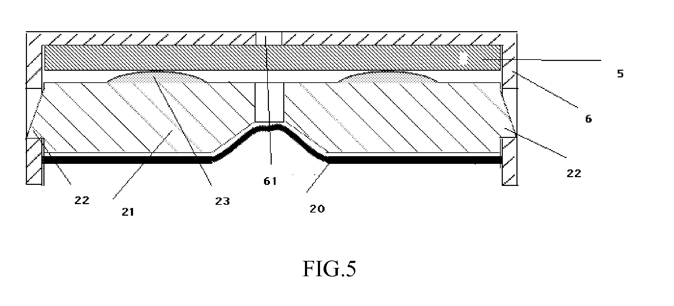

Pour cela et comme illustré de manière non limitative dans la Figure 5, un élément réceptacle 6 de module SIM est utilisé. Cet élément réceptacle 6 a une forme générale parallélépipédique creuse formant une face de fond recevant la face du module SIM 5 opposée à celles des contacts 4. Sur deux parois opposées de cet élément réceptacle sont formées des encoches ou ouvertures. Le connecteur 20, 21 comprend une embase 21 en matériau isolant dans laquelle sont logés N éléments conducteurs, N étant typiquement égal à 8. Ces N éléments conducteurs définissent N zones de contacts 23 respectives saillant superficiellement dans un plan de réception de module SIM du connecteur. Des secondes extrémités (non représentées) forment des bornes extérieures de couplage du connecteur, destinées typiquement à être soudées à des bornes correspondantes d'un circuit imprimé d'une unité de communication, par exemple GSM. La face de l'embase en matériau isolant 21 opposée à celle sur laquelle font saillie superficiellement les N zones de contact, est fixée à une lame en métal 20. Lorsque le connecteur 2 est introduit dans l'élément réceptacle 6, des ergots saillants opposés formés sur les faces extérieures de l'embase en matériau isolant du connecteur pénètrent respectivement dans les deux encoches, ou ouvertures, de l'élément réceptacle 6, verrouillant ainsi l'ensemble. En résultat, le connecteur se détruit irréversiblement si le module SIM est extrait du connecteur sans le truchement d'un outil spécialisé. En effet, le pour extraire le module SIM sans détruire le connecteur, il faut utiliser un outil muni d'une tige pivotante de percée. Cette tige est introduite, par une face opposée à celle sur laquelle est posé le module SIM après assemblage, dans une ouverture 61 prévue à cet effet dans la face de fond de l'élément réceptacle. La tige perce alors le module SIM 5 et vient appuyer sur la lame en métal 20 pour lui imposer une pression qui la fait s'incurver, et par la même libére les ergots 22 des ouvertures formées dans l'élément réceptacle 6.

## Revendications

1. Procédé d'assemblage d'un module SIM, **caractérisé par** les étapes successives de :
- alignement dudit module SIM et d'un connecteur,
- déplacement vertical, selon un axe perpendiculaire à un plan des zones de contact du connecteur, du module SIM vers le connecteur ou inversement,
- verrouillage mécanique du module SIM au connecteur par pression de fin de course lors dudit déplacement vertical, les contacts dudit module SIM étant ainsi maintenus affleurant avec des zones de contact respectives dudit connecteur.

2. Procédé selon la revendication 1, **caractérisé en ce qu'**il comprend en outre une étape de soudage, à des points de connexion d'une unité de communication comprenant des moyens de traitement de signal en bande de base et en radiofréquence, de l'élément assemblé formé du module SIM et du connecteur verrouillés ensemble, le soudage couplant électriquement des bornes extérieures du connecteur, restées visibles sur une face de l'élément assemblé et reliées auxdites zones de contact, auxdits points de connexion de l'unité de communication.

3. Connecteur pour la mise en oeuvre d'un procédé conforme à l'une quelconque des revendications précédentes, comprenant :
- un support en matériau isolant (2) recevant N éléments conducteurs, N strictement supérieur à 1 et typiquement égal à 8, ces N éléments conducteurs définissant N zones de contacts respectives saillant superficiellement dans un plan de réception de module SIM dudit connecteur et des secondes extrémités formant des bornes extérieures de couplage du connecteur, **caractérisé en ce qu'**il comprend, en outre :
- au moins un élément de verrouillage pour verrouiller mécaniquement le module SIM au connecteur.

4. Connecteur conforme à la revendication 3, **caractérisé en ce qu'**il comprend des moyens mécaniques se détruisant irréversiblement si le module SIM est extrait du connecteur sans le truchement d'un outil spécialisé.

5. Equipement ou unité de communication comprenant un connecteur conforme à l'une quelconque des revendications 3 ou 4.
